# EUROPÄISCHE PATENTSCHRIFT

(11) **EP 2 301 797 B1**
(45) Veröffentlichungstag und Bekanntmachung des Hinweises auf die Patenterteilung: **25.10.2017**
(21) Anmeldenummer: 10009531.4
(22) Anmeldetag: 14.09.2010
(51) Int. Cl.: B60N 2/34, B60N 2/44, B60N 2/68, B60N 2/02, B60N 2/225

(54) **SITZANORDNUNG FÜR EIN FAHRZEUG**
SEAT DEVICE FOR A VEHICLE
AGENCEMENT DE SIÈGE POUR UN VÉHICULE

(30) Priorität: 17.09.2009 DE 102009041655
(43) Veröffentlichungstag der Anmeldung: 30.03.2011
(73) Patentinhaber: AGUTI PRODUKTENTWICKLUNG & DESIGN GMBH, 88085 Langenargen (DE)
(72) Erfinder: Grieger, Michael, 88079 Kressbronn (DE)
(74) Vertreter: Otten, Roth, Dobler & Partner mbB Patentanwälte

(56) Entgegenhaltungen:
- EP-A1- 1 952 722
- DE-A1-102006 036 121
- JP-A- 2007 301 222
- JP-U- S59 196 159

## Beschreibung

### Stand der Technik:

Unterschiedliche Sitzanordnungen sind bekannt, die als Einzelsitz oder Sitzbank, insbesondere im Fahrzeugbereich, ausgeführt sind (JP S59 196159 U, EP 1 951 722 A1). Für eine erweiterte Nutzungsmöglichkeit ist es zudem bekannt, eine Sitzanordnung in einem Kraftfahrzeug zum Beispiel einem Pkw oder einem Nutzfahrzeug in eine Liegeanordnung umzubauen. Hierzu wird beispielsweise ein Rückenflächenelement der Sitzanordnung relativ zu einem Sitzflächenelement abgesenkt (JP 2007 301222 A).

Eine Nutzseite der Sitzanordnung in Fahrzeugen ist in den meisten Fällen mit einer auf eine Sitzposition einer Person abgestimmten Sitzkontur versehen bzw. das Sitzflächenelement und Rückenflächenelement ergonomisch ausgeformt. Beispielsweise sind Seitenpolster ausgestaltet, um einer in der Sitzanordnung sitzenden Person einen Seitenhalt zu geben.

Außerdem kann es beim Sitzflächenelement gewünscht sein, dass dieses nach vorne etwas ansteigt, um den sogenannten "Diving-Effekt" einer sitzenden Person bei einer Aufprallsituation des Fahrzeuges zu vermeiden, also ein Durchrutschen nach vorne, entlang des Sitzflächenelements und ggf. unterhalb eines angelegten Sicherheitsgurtes.

### Aufgabe und Vorteile der Erfindung:

Aufgabe der vorliegenden Erfindung ist es, eine Sitzanordnung der vorgenannten Art im Hinblick auf eine Nutzung als Liegeanordnung zu verbessern.

Diese Aufgabe wird durch den unabhängigen Anspruch 1 gelöst.

In den abhängigen Ansprüchen sind vorteilhafte Weiterbildungen der Erfindung aufgezeigt.

Die Erfindung geht aus von einer Sitzanordnung für ein Fahrzeug mit einem Sitzflächenelement und einem verstellbar gelagerten Rückenflächenelement, wobei das Rückenflächenelement in eine Liegeposition verstellbar ist und die Sitzanordnung eine Nutzseite aufweist, welche für die Nutzung der Sitzanordnung als Sitzgelegenheit für eine Person eine Sitzkontur bildet, wobei Seitenbereiche der Nutzseite erhöht zu weiteren Bereichen eines Hauptrückenteils und/ oder eines Hauptsitzteils der Nutzseite ausgebildet sind, wobei Verstellmittel vorgesehen sind, um die Sitzanordnung in eine Liegeanordnung verstellen zu können. Die weiteren Bereiche bzw. deren die Nutzseite bildenden Abschnitte sind insbesondere eben bzw. flach ausgestaltet.

Der Kern der Erfindung liegt darin, dass durch die Verstellung in die Liegeposition eine Einebnung der Seitenbereiche in Bezug auf die weiteren Bereiche des Hauptrückenteils und des Hauptsitzteils stattfindet, wobei das Hauptrückenteil, das Hauptsitzteil und die Seitenbereiche der Sitzanordnung in der Liegeposition eine ebene Liegeoberfläche bilden.

Die Weiteren Bereiche bzw. deren Nutzseite bildenden Abschnitte sind in der Liegeposition eben bzw. flach ausgestaltet. Grundsätzlich umfasst die Erfindung auch Sitzanordnungen, bei welchen nicht nur Seitenbereiche erhöht gegenüber weiteren Bereichen sind, so dass mit der Verstellung erfindungsgemäß auch diese erhöhten bzw. angestellten Bereiche eingeebnet werden. Auf diese Fälle wird im Weiteren aber nicht gesondert eingegangen, so dass nachfolgend von Seitenbereichen gesprochen wird, da dies dem Regelfall entspricht.

Mit der Erfindung wird zunächst insbesondere der Nutzkomfort der Sitzanordnung erhöht. So kann eine Liegeposition bzw. - anordnung geschaffen werden, deren bereitgestellte Liegefläche ideal für ein bequemes Liegen eben ausgebildet ist. Dies steht im Gegensatz zu bekannten Anordnungen, bei denen in der Liegeanordnung erhöhte Bereiche nicht eingeebnet sind und als unbequem bzw. störend empfundenen werden.

Bisherige versuche, eine verbesserte Nutzung der in Liegeanordnungen umbaubaren Sitzanordnungen zu ermöglichen, sind nicht zufriedenstellend. Beispielsweise sind luftgefüllte Polster bekannt, welche erhöhte Bereiche der Sitzkontur bilden und durch Ablassen der Luftfüllung verschwinden, um für die Liegeanordnung keine Erhöhung zu bilden. Diese Vorgehensweise ist umständlich, wenig praxistauglich und unter ergonomischen Gesichtspunkten unbefriedigend. Insbesondere kann der Bereich des abgelassenen Polsters keine ausreichende Stützfunktion erfüllen bzw. bildet unerwünschte Auffaltungen und/oder Mulden. Des Weiteren sind zusätzlich pneumatische Einrichtungen zum Befüllen und Ablassen der Luftpolster notwendig oder der Nutzer muss selbst das Polster aufblasen bzw. ablassen. Außerdem können solche Luftpolster mit der Zeit undicht werden.

Erfindungsgemäß kann der Umbau der Sitzanordnung in die Liegeanordnung insbesondere selbsttätig bzw. automatisch erfolgen, wobei die zu bildende Liegefläche in eine flache, ebene Liegefläche bzw. ein Bett mit minimaler Kontur der Oberseite verstellt wird. Die Liegefläche weist dabei vorteilhafterweise in den abgeflachten Bereichen die gleichen oder vergleichbaren Eigenschaften auf, wie die verbleibenden Bereich der Nutzseite. Die Liegefläche kann durchgängig ergonomisch vorteilhaft, stabil und bequem ausgestaltet sein. Denn erfindungsgemäß können die Seitenbereiche von gleicher Art bzw. Qualität wie die anderen Flächen der Nutzseite der Sitz- bzw. Rückenflächenelemente bereitgestellt werden, was z. B. bei Luftpolsteranordnungen der Seitenbereiche nicht der Fall ist.

Erfindungsgemäß erfolgt das Verstellen des Rückenflächenelements und des Sitzflächenelements relativ zueinander gekoppelt mit einer Verstellung der seitlichen Bereiche. Mit der notwendigen Verstellung der Neigung bzw. Position des Rückenflächen- und ggf. des Sitzflächenelements findet insbesondere gleichzeitig bzw. in einem Vorgang auch die Anpassung bzw. Abflachung der Seitenbereiche der Nutzseite statt. Der Nutzer muss diesbezüglich nichts beachten oder gar selbst Hand anlegen. Die Seitenbereiche sind relativ zu den weiteren Bereichen verstellbar gelagert. Dies ermöglicht definierte Verstellwege und Verstellpositionen der Seitenbereiche. Die Einebnung und das erneute Zurückverstellen der Seitenbereiche von der eingeebneten Liegeanordnung in die angestellte Ausrichtung der Sitzanordnung kann beliebig oft reproduzierbar und präzise stattfinden.

Eine besonders vorteilhafte Variante zeichnet sich dadurch aus, dass die Verstellmittel eine Antriebseinheit für die Verstellung in die Liegeanordnung umfassen. Die Antriebseinheit umfasst insbesondere einen Elektro-Antriebsmotor. Grundsätzlich kann zusätzlich oder alternativ eine manuell zu bedienende Verstellmechanik zum Beispiel mit einer Kurbelbedienung vorhanden sein, welche als Antriebseinheit fungiert. Über die Kurbelbedienung kann zum Beispiel auf bewegbare Verstell- und Getriebeelemente eingewirkt werden.

Die Verstellmittel können so abgestimmt sein, dass die gebildete Liegefläche der Liegeanordnung eine einheitliche bzw. durchgängig geschlossene Liegefläche bzw. Oberseite bzw. Liegeoberfläche aufweist. Die Liegefläche kann auch über vergleichsweise zur gesamten Liegeoberfläche vergleichsweise geringe Bereiche unterbrochen sein, z. B. schmale Zwischenbereiche aufweisen, was aber für einen hohen Liegekomfort unerheblich ist.

Insbesondere muss ein Nutzer nicht selbst tätig werden, um insbesondere eine ebene Liegefläche der Liegeanordnung zu erhalten.

Es ist überaus vorteilhaft, dass die Verstellmittel derart gestaltet sind, dass durch das Verstellen der Sitzanordnung eine Liegefläche bildbar ist, bei welcher die Seitenbereiche der Nutzseite fluchtend an die weiteren Bereiche der Nutzseite anschließen.

Durch die fluchtende Anordnung der seitlichen Bereiche zu den weiteren Bereichen der Nutzseite können auch geringste Absätze, Kanten oder andere Unebenheiten in der Liegefläche vermieden werden. Die Verstellmittel können.insbesondere immer eine insbesondere horizontal ausgerichtete und ebene Liegefläche generieren. Gegebenenfalls kann hierzu mit den Verstellmitteln das Sitzflächen- und das Rückenflächenelement so angetrieben verstellt werden, dass eine entsprechende räumlich Ausrichtung der Liegefläche erhalten wird. Auch eine Verstellung eines Grundrahmens, auf dem das Sitzflächen- und Rückenflächenelement angeordnet ist, ist möglich.

Die Verstellmittel sind insbesondere ausgebildet, getätigte Umbauvorgänge reversible durchzuführen. So kann die Liegeanordnung in die Sitzanordnung über die Verstellmittel z. B. mittels der Antriebseinheit wieder rückgebaut werden. Dies erfolgt in der Regel gleichartig wie der Umbauvorgang von der Sitz- in die Liegeanordnung nur mit umgekehrtem Verlauf. Es ist aber auch ein Sahnellrückbau nicht ausgeschlossen, der schneller erfolgt und/oder andere Umbaubewegungsmuster aufweist.

Ein Nutzer kann zum Starten eines Umbauvorgangs diesen z. B. lediglich über einen einfachen Auslösevorgang beispielsweise einen Knopfdruck in Gang setzen. Gegebenenfalls kann der Umbauvorgang jederzeit sofort gestoppt bzw. wieder rückgängig gemacht werden. Hierzu sind geeignete Befehlsmittel vorzusehen, die z. B. mit einer übergeordneten Steuerung für den Verstellvorgang bzw. die Verstellmittel verbunden sind.

Weiter wird vorgeschlagen, dass die Verstellmittel ausgebildet sind, das Verstellen der Sitzanordnung in die Liegeanordnung in einem kontinuierlichen Umbauvorgang auszuführen. Damit kann die Verstellung ggf. zu nahezu beliebigen Verstellzeitpunkten unterbrochen werden und der dabei erreichte Verstellzustand festgehalten werden. Dies kann z. B. beim Umbau der Sitzanordnung in eine alternative Sitzanordnung mit anderen räumlicher Gestalt der Sitzanordnung vorteilhaft sein.

Bevorzugt sind die Verstellmitteln ausgebildet, das Verstellen des Rückenflächenelements und des Sitzflächenelements relativ zueinander und das Verstellen der Seitenbereiche allein motorisch vorzunehmen. So können auch Personen die Sitzanordnung vorteilhaft nutzen, denen es kaum möglich ist, beim Umbau mitzuwirken, z. B. körperlich beeinträchtigte Personen oder Kinder.

In einer modifizierten Ausführungsform der Erfindung ist genau eine Antriebseinheit vorgesehen, mit welcher das Verstellen des Rückenflächenelements und des Sitzflächenelements relativ zueinander und das Verstellen der Seitenbereiche vornehmbar ist. Dies ist besonders platzsparend und wirtschaftlich. Auch unerwünschte Antriebsgeräusche lassen sich so minimieren.

Weiter wird vorgeschlagen, dass die Anordnung Einzelsitze aufweist und dass eine Antriebseinheit für jeweils einen Sitz der Sitzanordnung vorgesehen ist, mit welcher das Verstellen des Rückenflächenelements und des Sitzflächenelements des Sitzes relativ zueinander und das Verstellen der Seitenbereiche des Sitzes vornehmbar ist. So kann zum Beispiel jeder Sitz einer mehrsitzigen Sitzanordnung einzeln bzw. separat motorisch verstellt werden.

Bevorzugt umfassen die Verstellmittel zur Kopplung zwischen der Antriebseinheit und einem Seitenbereich für das Verstellen der Sitzanordnung in die Liegeanordnung eine Hebelanordnung.

Mit der Hebelanordnung lassen sich konstruktiv einfach Kräfte bzw. Momente übertragen, wobei eine bei dem Verstellen der Sitzanordnung wirksame Hebellänge der Hebelanordnung ggf. motorisch veränderbar ist.

Es ist überdies vorteilhaft, dass die Verstellmittel eine Federanordnung umfassen, mit welcher eine Zugkraft auf beim Verstellen der Sitzanordnung bewegbare Bauteile einrichtbar ist. Insbesondere kann die Zugkraft durch die Federanordnung auch vor bzw. nach dem Verstellen wirksam sein, wodurch die bewegbaren Bauteile in einer definierten bzw. fixierten Position verbleiben können.

Schließlich wird weiter vorgeschlagen, dass eine Gelenkanordnung zwischen relativ zueinander verstellbaren Elementen der Sitzanordnung vorhanden ist, mit welcher beim Verstellen der Sitzanordnung die verstellbaren Elemente der Sitzanordnung mit der Antriebseinheit in unterschiedliche Relativstellungen bringbar sind. Über passende Gelenkanordnungen bzw. Drehgelenke beispielsweise kann ein Sitzflächenelement und ein Rückenflächenelement über benachbarte Abschnitte zueinander in einem Winkel verstellt werden, so dass eine ideale Winkelstellung für die Sitzanordnung einstellbar ist.

### Figurenbeschreibung:

Weitere Vorteile und Merkmale der Erfindung werden anhand eines stark schematisiert dargestellten Ausführungsbeispieles der Erfindung näher erläutert.

Im Einzelnen zeigt:
- Figur 1: eine erfindungsgemäße Sitz-Liegebank mit zwei Einzelsitzen in einem Sitzanordnungszustand in Vorderansicht,
- Figur 2: die Sitz-Liegebank gemäß Figur 1 in einem Liegeanordnungszustand und
- Figur 3: eine Funktionskonstruktion der Sitz-Liegebank 1 gemäß Figur 1 in Rückansicht.

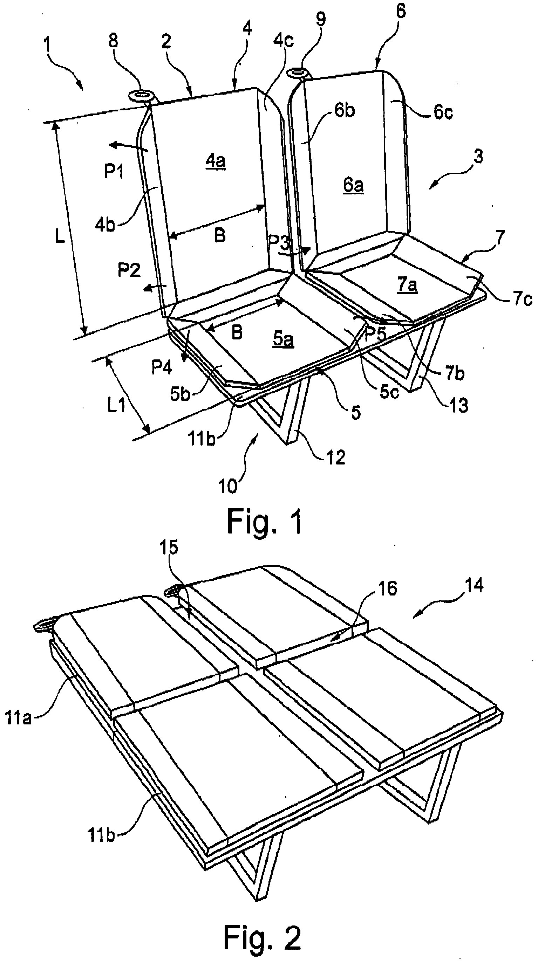

Figur 1 zeigt eine Sitz-Liegebank 1 beispielsweise für einen Pkw, ein Wohnmobil oder anderes Nutzfahrzeug. Die Sitz-Liegebank 1 ist stark schematisiert als Anordnung mit zwei Einzelsitzen 2 und 3 realisiert, die gleichartig aufgebaut sind. Der Einzelsitz 2 weist ein Rückenflächenelement 4 und ein Sitzflächenelement 5 bzw. der Einzelsitz 3 weist ein Rückenflächenelement 6 und ein Sitzflächenelement 7 auf. In dem Sitzanordnungszustand gemäß Figur 1 stehen die Rückenflächenelemente 4 und 6 in etwas rechtwinklig bzw. aufrecht relativ zu den Sitzflächenelementen 5 und 7. Jeder Einzelsitz 2, 3 ist auf einer in Figur 1 ersichtlichen Nutzseite ergonomisch vorteilhaft geformt, was jedoch nicht detailgetreu sondern stark schematisiert angedeutet ist.

Die Rückenflächenelemente 4, 6 weisen jeweils ein in der Grundform rechtwinkliges Hauptrückenteil 4a und 6a mit einer Breite B und einer Länge L auf. Entsprechend weisen die Sitzflächenelemente 5, 7 jeweils ein in der Grundform ebenfalls rechtwinkliges und in etwa horizontal ausgerichtetes Hauptsitzteil 5a und 7a mit einer Breite B und einer Länge L1 auf, wobei L1 kleiner L ist.

An den Hauptrückenteilen 4a, 5a sind jeweils entlang der längeren Seiten streifenförmige Seitenbereiche 4b, 4c und 6b, 6c vorhanden, die zur Nutzseite der Einzelsitze 2, 3 gehören und für einen Seitenhalt im Rücken- und Schulterbereich von in den Einzelsitzen 2, 3 sitzenden Personen sorgen. Zum Hauptrückenteil 4a gehören die Seitenteile bzw. Seitenbereiche 4b, 4c bzw. zum Hauptrückenteil 6a die Seitenbereiche 6b, 6c.

Entsprechend sind nach oben abgewinkelte bzw. angestellte Seitenbereiche 5b, 5c jeweils an der langen Seite des Hauptsitzteils 5a bzw. Seitenbereiche 7b, 7c an dem Hauptsitzteil 7a beidseitig positioniert. Die Seitenbereiche 4b, 4c und 6b, 6c sind in dem gezeigten Sitzanordnungszustand jeweils unter einem gleichen Winkel zum Hauptrückenteil 4a bzw. Hauptrückenteil 6a nach vorne abgewinkelt, beispielsweise um etwa 40 bis 50 Winkelgrade, prinzipiell ist aber auch eine dazu verschiedene Abwinkelung möglich.

Entsprechend sind die Seitenbereiche 5b, 5c bzw. 7b, 7c nach oben um ca. 40 bis 50 Winkelgrade gegenüber den Hauptsitzteilen 5a und 7a abgewinkelt. Insgesamt bilden damit die Einzelsitze 2, 3 eine ergonomische Sitzkontur auf ihrer Nutzseite für eine gesunde und bequeme Sitzposition einer in den Einzelsitzen 2, 3 sitzende Personen.

Die Seitenbereiche 5b, 5c, 7b, 7c bzw. 4b, 4c, 6b, 6c sind über geeignete Schwenklagerungen zum Beispiel über Scharniergelenke aufgenommen, zum Beispiel an den Hauptsitzteilen 5a und 7a bzw. an den Hauptrückenteilen 4a und 6a oder getrennt von diesen an weiteren vorhandenen Abschnitten.

Des Weiteren sind stark schematisiert dargestellte Elemente einer Personen-Rückhalteanordnung wie beispielsweise Elemente einer Sicherheitsgurtanordnung an den Einzelsitzen 2 und 3 vorgesehen. Dies ist am Einzelsitz 2 eine Umlenkanordnung 8 bzw. eine Umlenkanordnung 9 am Einzelsitz 3 etwas oberhalb und nach hinten versetzt zum Rückenflächenelement 4 bzw. zum Rückenflächenelement 5.

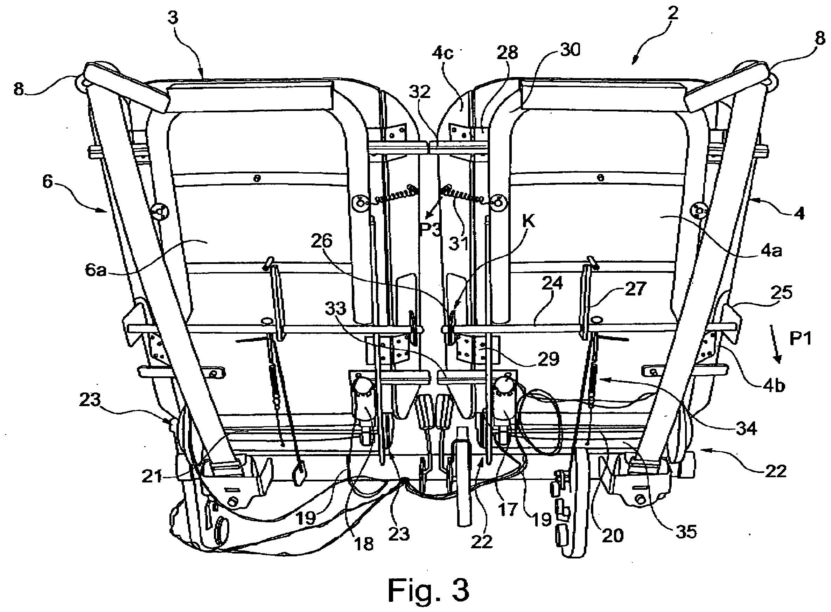

Auf der Rückseite der Rückenflächenelemente 4 bzw. 5 ist mit diesen verbunden eine Grundplatte 11a vorgesehen, die in Figur 2 ersichtlich ist, und an der in den Figuren 1 und 2 verdeckte Elemente vorhanden sind, die in Figur 3 dargestellt sind. Diese können weitere Elemente der Sicherheitsgurtanordnung wie beispielsweise ein Gurtaufroller sein oder Verstrebungsprofile und Verstellmittel zum Verstellen der Sitz-Liegebank 1 in den Sitzanordnungs- bzw. Liegeanordnungszustand. Grundsätzlich kann die Grundplatte 11a auch entfallen und die genannten Elemente sind rückseitig am Rückenflächenelement 4 bzw. 6 angebracht (siehe Figur 3). Auch die Sitzflächenelemente 5 und 7 sind an einer Grundplatte 11b angebracht, die oben an einem Grundgestell 10 zur Aufnahme der Einzelsitze 2 und 3 fixiert ist. Das Grundgestell 10 umfasst bügelartig Fußgestelle 12 und 13, die jeweils in etwa mittig unterhalb der Sitzflächenteile 5a und 7a angreifen und für eine Verankerung der Sitz-Liegebank 1 an beispielsweise einem Fahrzeugboden sorgen.

Mit einem zum Beispiel motorischen Antrieb der Verstellmittel gemäß Figur 3 kann die Sitz-Liegebank aus dem in Figur 1 gezeigten Sitzanordnungszustand in einen gemäß Figur 2 dargestellten Liegeanordnungszustand bzw. in eine Liegeanordnung 14 umgebaut werden. So kann in kurzer Zeit und ohne manuelles Umbauen die Sitz-Liegebank 1 in eine Liegemöglichkeit, beispielsweise eine Schlafmöglichkeit für zwei Personen umgebaut werden. Die Verstellmittel für die Sitz-Liegebank 1 kann genau einen motorischen Antrieb bzw. einen gemeinsamen Motor aufweisen oder jeweils einen motorischen Antrieb für die Einzelsitze 2 und 3.

Die Verstellung kann insbesondere derart erfolgen, dass die Liegeanordnung 14 insbesondere eine absolut ebene Liegeoberfläche gemäß Figur 2 aufweist, in der die Elemente 4a, 4b, 4c, 5a, 5b, 5c, 6a, 6b, 6c, 7a, 7b, 7c der Sitz-Liegebank 1 mit ihrer jeweiligen selbst ebenen Oberseite in einer Ebene liegen. Auch wenn in einem zu Figur 1 alternativen Sitzanordnungszustand einer Sitz-Liegebank einzelne oder alle der genannten Elemente selbst nicht eben sind, sondern z. B. gewölbt, können erfindungsgemäß diese beim Verstellvorgang in eine Gestalt mit ebener Oberseite gebracht werden, so dass auch dann die Anordnung gemäß Figur 2 erreicht werden kann.

Die Verstellbewegung für den Umbau der Sitz-Liegebank 1 gemäß Figur 1 in die Liegeanordnung 14 gemäß Figur 2 ist in Figur 1 anhand des Einzelsitzes 2 angedeutet, wonach das Rückenflächenelement 4 gegenüber dem Sitzflächenelement 5 nach hinten bzw. unten gemäß Pfeil P1 verschwenkt wird. Außerdem erfolgt mit diesem Verschwenken gekoppelt die motorische Verstellung bzw. das Einebnen bzw. Flachklappen der Seitenbereiche 4b und 4c gemäß der Pfeile P2 und P3.

Entsprechend erfolgt mit dem Abschwenken nach hinten unten des Rückenflächenelements 4 und dem Flachlegen der Seitenbereiche 4b, 4c das Flachlegen der Seitenbereiche 5b und 5c entsprechend der Pfeile P4 und P5.

Falls die Sitzflächenteile 5a und 7a nach vorne zu einer freien Sitzkante etwas höher ausgerichtet sind gegenüber einer den Rückenflächenelementen 4 und 6 zugewandten Seiten bzw. eine leichte Schräge bilden, um insbesondere dem "Diving-Effekt" entgegenzuwirken, werden zusätzlich und gekoppelt zu den vorgenannten Verstellbewegungen die Sitzflächenteile 5a und 7a durch die Antriebseinheit in den Liegeanordnungszustand gemäß Figur 2 in eine ebene Ausrichtung bzw. fluchtend zu den anderen Liegeflächenelementen 4a, 4b, 4c, 6a, 6b, 6c, 5b, 5c, 7b und 7c gebracht.

So kann gemäß Figur 2 eine Liegeanordnung 14 realisiert werden, bei welcher sämtliche durch die Hauptrückenteile 4a, 6a und Hauptsitzteile 5a, 7a gebildete Liegefläche in einer Ebene liegt und zu sämtlichen nach unten geklappten Seitenbereichen 4b, 4c und 6b, 6c und 5b, 5c und 7b, 7c.

Gegebenenfalls, können streifenförmige sich kreuzende nach unten abgesetzte Zwischenbereiche 15, 16 ohne Polsterung, die in Figur 2 stark schematisiert und nicht realistisch vergrößert dargestellt sind, zwischen den Liegeflächenelementen 4a, 4b, 4c, 6a, 6b, 6c, 5b, 5c wegfallen.

Beispielsweise können die Zwischenbereiche 15 und 16 durch eine entsprechend angepasste motorische Verstellung der Einzelsitze 2 und 3 und/oder deren Positionierung und Dimensionierung minimiert werden oder ganz verschwinden. Figur 3 zeigt die Rückseite der Sitz-Liegebank 1 gemäß Figur 1 in einer Funktionskonstruktion in der Art eines Prototyps. Jedem Einzelsitz 2, 3 ist jeweils ein Elektromotor 17, 18 zum motorischen Verstellen der Sitz-Liegebank 1 zugeordnet. Die Elektromotoren 17, 18 sind jeweils im unteren Bereich der Rückenflächenelemente 4, 6 angeordnet und mit Versorgungskabeln 19 mit einer Versorgungs- und Steuereinheit (nicht gezeigt) zur elektrischen und steuerungstechnischen Anbindung versehen.

Die Elektromotoren 17, 18 können jeweils eine Welle 20, 21 in beide Drehrichtungen antreiben, um die Rückenflächenelemente 4, 6 aufrecht oder flach zu stellen bzw. aus der gezeigten aufrechten Stellung nach hinten zu verschwenken, was für das Rückenflächenelement 4 gemäß Pfeil P1 angedeutet ist. Die Verstellung erfolgt motorisch über den Elektromotor 17 und entsprechend für den Einzelsitz 3 über den Elektromotor 18. Über die drehende Welle 20 wird auf eine Gelenkanordnung 22 bzw. über die drehende Welle 21 wird auf eine Gelenkanordnung 23 eingewirkt, wobei die Rückenflächenelemente 4, 6 über die Gelenkanordnung 22, 23 verschwenkbar gelagert sind.

Auf der Rückseite des Einzelsitzes 2 in etwa auf halber Höhe erstreckt sich ein drehbar an einem Lagerprofil 27 gelagerter Drehstab 24 parallel zur Welle 20. An beiden Enden des Drehstabs 24 ist jeweils ein zum Drehstab 24 abgewinkeltes Stellelement 25, 26 vorgesehen, wobei die Stellelemente 25, 26 je nach Drehstellung des Drehstabs 24 auf die Seitenbereiche 4b und 4c einwirken. Beispielhaft ist für den Seitenbereich 4c die schwenkbare Lagerung am Hauptrückenteil 4a über zwei Scharniere 28, 29 gezeigt.

Zwischen einem U-förmigen Profilrohr 30 auf der Rückseite des Rückenflächenelements 4 und dem Seitenbereich 4c ist eine Spiralfeder 31 vorgespannt vorhanden, so dass der Seitenbereich 4c gegen das Stellelement 26 gezogen wird und in einer definierten Position gehalten wird.

Wird nun durch nach hinten Verschwenken des Rückenflächenelements 4 der Drehstab 24 verdreht und ein wirksamer Hebel zwischen der Drehachse des Drehstabs 24 und einem Kontaktpunkt K des Stellelements 26 mit dem Seitenbereich 4c verkürzt, wird der Seitenbereich 4c gemäß Pfeil P3 unter der Wirkung der Spiralfeder 31 nach hinten geklappt und in der Endposition der Verstellung gemäß Figur 2 eben zum Hauptrückenteil 4a gebracht. Als Anschlag für den Seitenbereich 4c dienen Anschlagprofile 32, 33.

Um gezielt bzw. definiert gekoppelt auf den Drehstab 24 beim Verschwenken des Rückenflächenelements 4 einzugreifen, greift eine Stab-Federanordnung 34 mit einem Ende an dem Drehstab 24 an und mit ihrem anderen Ende an einem Bereich eines festen Horizontalholms 35 des Grundgestells 10 an.

Der Seitenbereich 4b ist entsprechend bedienbar und wird unter gleichem Anstellwinkel gleichartig über den Drehstab 24 und das Stellelement 25 verstellt.

Auf entsprechende Weise ist der Einzelsitz 3 ausgebildet und verstellbar.

### Bezugszeichenliste:

- 1: Sitz-Liegebank
- 2: Einzelsitz
- 3: Einzelsitz
- 4: Rückenflächenelement
- 4a: Hauptrückenteil
- 4b: Seitenbereich
- 4c: Seitenbereich
- 5: Sitzflächenelement
- 5a: Hauptsitzteil
- 5b: Seitenbereich
- 5c: Seitenbereich
- 6: Rückenflächenelement
- 6a: Hauptrückenteil
- 6b: Seitenbereich
- 6c: Seitenbereich
- 7: Sitzflächenelement
- 7a: Hauptsitzteil
- 7b: Seitenbereich
- 7c: Seitenbereich
- 8: Umlenkanordnung
- 9: Umlenkanordnung
- 10: Grundgestell
- 11a: Grundplatte
- 11b: Grundplatte
- 12: Fußgestell
- 13: Fußgestell
- 14: Liegeanordnung
- 15: Zwischenbereich
- 16: Zwischenbereich
- 17: Elektromotor
- 18: Elektromotor
- 19: Versorgungskabel
- 20: Welle
- 21: Welle
- 22: Gelenkanordnung
- 23: Gelenkanordnung
- 24: Drehstab
- 25: Stellelement
- 26: Stellelement
- 27: Lagerprofil
- 28: Scharnier
- 29: Scharnier
- 30: Profilrohr
- 31: Spiralfeder
- 32: Anschlagprofil
- 33: Anschlagprofil
- 34: Stab-Federanordnung
- 35: Horizontalholm

## Patentansprüche

1. Sitzanordnung (1) für ein Fahrzeug mit einem Sitzflächenelement (5, 7) und einem verstellbar gelagerten Rückenflächenelement (4, 6), wobei das
Rückenflächenelement (4, 6) in eine Liegeposition verstellbar ist und die Sitzanordnung (1) eine Nutzseite aufweist, welche für die Nutzung der Sitzanordnung (1) als Sitzgelegenheit für eine Person eine Sitzkontur bildet, wobei Seitenbereiche (4b, 4c, 5b, 5c, 6b, 6c, 7b, 7c) der Nutzseite erhöht zu weiteren Bereichen eines Hauptrückenteils (4a, 6a) und/oder eines Hauptsitzteils (5a, 7a) der Nutzseite ausgebildet sind, wobei Verstellmittel vorgesehen sind, um die Sitzanordnung (1) in eine Liegeanordnung (14) verstellen zu können, **dadurch gekennzeichnet, dass** durch die Verstellung der Sitzanordnung (1) in die Liegeposition eine Verstellung und/oder Einebnung der Seitenbereiche (4b, 4c, 5b, 5c, 6b, 6c, 7b, 7c) in Bezug auf die weiteren Bereiche des Hauptrückenteils (4a, 6a) und des Hauptsitzteils (5a, 7a) stattfindet, wobei das Hauptrückenteil, das Hauptsitzteil und die Seitenbereiche der Sitzanordnung in der Liegeposition eine ebene Liegeoberfläche bilden.

2. Sitzanordnung nach Anspruch 1, **dadurch gekennzeichnet, dass** die Verstellmittel eine Antriebseinheit (17, 18) für die Verstellung in die Liegeanordnung (14) umfassen.

3. Sitzanordnung nach einem der vorhergehenden Ansprüche, **dadurch gekennzeichnet, dass** die Verstellmittel derart gestaltet sind, dass durch das Verstellen der Sitzanordnung (1) eine Liegefläche bildbar ist, bei welcher die Seitenbereiche (4b, 4c, 5b, 5c, 6b, 6c, 7b, 7c) der Nutzseite fluchtend an die weiteren Bereiche (4a, 5a, 6a, 7a) der Nutzseite anschließen.

4. Sitzanordnung nach einem der vorhergehenden Ansprüche, **dadurch gekennzeichnet, dass** die Verstellmittel ausgebildet sind, das Verstellen der Sitzanordnung (1) in die Liegeanordnung (14) in einem kontinuierlichen Umbauvorgang auszuführen.

5. Sitzanordnung nach Anspruch 2, **dadurch gekennzeichnet, dass** die Verstellmittel ausgebildet sind, das Verstellen des Rückenflächenelements (4, 6) und des Sitzflächenelements (5, 7) relativ zueinander und das Verstellen der Seitenbereiche (4b, 4c, 5b, 5c, 6b, 6c, 7b, 7c) allein motorisch vorzunehmen.

6. Sitzanordnung nach Anspruch 2, **dadurch gekennzeichnet, dass** genau eine Antriebseinheit vorgesehen ist, mit welcher das Verstellen des Rückenflächenelements (4, 6) und des
Sitzflächenelements (5, 7) relativ zueinander und das Verstellen der Seitenbereiche (4b, 4c, 5b, 5c, 6b, 6c, 7b, 7c) vornehmbar ist.

7. Sitzanordnung nach Anspruch 2, **dadurch gekennzeichnet, dass** die Anordnung Einzelsitze (2, 3) aufweist und dass eine Antriebseinheit für jeweils einen Sitz (2, 3) der Sitzanordnung (1) vorgesehen ist, mit welcher das Verstellen des Rückenflächenelements (4, 6) und des Sitzflächenelements (5, 7) des Sitzes (2, 3) relativ zueinander und das Verstellen der Seitenbereiche (4b, 4c, 5b, 5c, 6b, 6c, 7b, 7c) des Sitzes (2, 3) vornehmbar ist.

8. Sitzanordnung nach Anspruch 2, **dadurch gekennzeichnet, dass** die Verstellmittel zur Kopplung zwischen der Antriebseinheit und einem Seitenbereich (4b, 4c, 5b, 5c, 6b, 6c, 7b, 7c) für das Verstellen der Sitzanordnung (1) in die Liegeanordnung (14) eine Hebelanordnung umfassen.

9. Sitzanordnung nach einem der vorhergehenden Ansprüche, **dadurch gekennzeichnet, dass** die Verstellmittel eine Federanordnung umfassen, mit welcher eine Zugkraft auf beim Verstellen der Sitzanordnung bewegbare Bauteile einrichtbar ist.

10. Sitzanordnung nach Anspruch 2, **dadurch gekennzeichnet, dass** eine Gelenkanordnung zwischen relativ zueinander verstellbaren Elementen der Sitzanordnung (1) vorhanden ist, mit welcher beim Verstellen der Sitzanordnung (1) die verstellbaren Elemente der Sitzanordnung (1) mit der Antriebseinheit in unterschiedliche Relativstellungen bringbar sind.

## Claims

1. Seat arrangement (1) for a motor vehicle with a seat surface element (5, 7) and an adjustably mounted back surface element (4, 6), wherein the back surface element (4, 6) can be adjusted into a lying position and the seat arrangement (1) has a usable side, which forms a seat contour for the use of the seat arrangement (1) as seating for one person, wherein side sections (4b, 4c, 5b, 5c, 6b, 6c, 7b, 7c) of the usable side are designed to be raised relative to other areas of a main back part (4a, 6a) and/or a main seat part (5a, 7a) of the usable side, wherein adjusting means are provided in order adjust the seat arrangement (1) into a lying arrangement (14), **characterised in that** by adjusting the seat arrangement (1) into the lying position an adjustment and/or levelling of the side sections (4b, 4c, 5b, 5c, 6b, 6c, 7b, 7c) relative to other areas of the main back part (4a, 6a) and the main seat part (5a, 7a) takes place, wherein the main back part, the main seat part and the side sections of the seat arrangement form a flat lying surface in the lying position.

2. Seat arrangement according to claim 1, **characterised in that** the adjusting means comprise a drive unit (17, 18) for adjusting into a lying arrangement (14).

3. Seat arrangement according to any of the preceding claims, **characterised in that** the adjusting means are designed so that by adjusting the seat arrangement (1) a lying surface can be formed, in which the side sections (4b, 4c, 5b, 5c, 6b, 6c, 7b, 7c) of the usable side are flush with the additional sections (4a, 5a, 6a, 7a) of the usable side.

4. Seat arrangement according to any of the preceding claims, **characterised in that** the adjusting means are designed to adjust the seat arrangement (1) into the lying arrangement (14) by means of a continuous adjustment process.

5. Seat arrangement according to claim 2, **characterised in that** the adjusting means are designed to adjust the back surface element (4, 6) and the seat surface element (5, 7) relative to one another and to adjust the side sections (4b, 4c, 5b, 5c, 6b, 6c, 7b, 7c) solely by motor.

6. Seat arrangement according to claim 2, **characterised in that** exactly one drive unit is provided by means of which the adjustment of the back surface element (4, 6) and the seat surface element (5, 7) relative to one another and the adjustment of the side sections (4b, 4c, 5b, 5c, 6b, 6c, 7b, 7c) can be performed.

7. Seat arrangement according to claim 2, **characterised in that** the arrangement comprises individual seats (2, 3) and **in that** a drive unit is provided for each seat (2, 3) of the seat arrangement (1), by means of which the adjustment of the back surface element (4, 6) and the seat surface element (5, 7) of the seat (2, 3) relative to one another and the adjustment of the side sections (4b, 4c, 5b, 5c, 6b, 6c, 7b, 7c) of the seat (2, 3) can be performed.

8. Seat arrangement according to claim 2, **characterised in that** the adjusting means comprise a lever arrangement for coupling between the drive unit and a side section (4b, 4c, 5b, 5c, 6b, 6c, 7b, 7c) for adjusting the seat arrangement (1) into the lying arrangement (14).

9. Seat arrangement according to any of the preceding claims, **characterised in that** the adjusting means comprise a spring arrangement by means of which traction force can be applied to components which are movable when adjusting the seat.

10. Seat arrangement according to claim 2, **characterised in that** a hinge arrangement is provided between elements of the seat arrangement (1) which are adjustable relative to one another, by means of which when adjusting the seat arrangement (1) the adjustable elements of the seat arrangement (1) can be moved by the drive unit into different relative positions.

## Revendications

1. Disposition d'assise (1) pour un véhicule, comprenant un élément de surface d'assise (5, 7) et un élément de surface de dossier (4, 6) monté pour pouvoir être réglé, l'élément de surface de dossier (4, 6) pouvant être réglé dans une position de couchage et la disposition d'assise (1) comprenant un côté d'utilisation, lequel forme un contour d'assise pour l'utilisation de la disposition d'assise (1) comme siège pour une personne, des zones latérales (4b, 4c, 5b, 5c, 6b, 6c, 7b, 7c) du côté d'utilisation étant rehaussées du côté d'utilisation par rapport à d'autres zones d'une partie principale de dossier (4a, 6a) et/ou d'une partie principale d'assise (5a, 7a), des moyens de réglage étant prévus pour pouvoir régler la disposition d'assise (1) dans une disposition de couchage (14), **caractérisé en ce que,** à la suite du réglage de la disposition d'assise (1) dans la position de couchage, il se produit un réglage et/ou un aplanissement des zones latérales (4b, 4c, 5b, 5c, 6b, 6c, 7b, 7c) par rapport aux autres zones de la partie principale de dossier (4a, 6a) et de la partie principale d'assise (5a, 7a), la partie principale de dossier, la partie principale d'assise et les zones latérales de la disposition d'assise formant, dans la position de couchage, une surface de couchage plane.

2. Disposition d'assise selon la revendication 1, **caractérisée en ce que** les moyens de réglage comprennent une unité d'entraînement (17, 18) pour le réglage dans la disposition de couchage (14).

3. Disposition d'assise selon l'une des revendications précédentes, **caractérisée en ce que** les moyens de réglage sont réalisés de telle manière que, à la suite du réglage de la disposition d'assise (1), une surface de couchage peut être formée dans laquelle les zones latérales (4b, 4c, 5b, 5c, 6b, 6c, 7b, 7c) du côté d'utilisation se trouvent dans l'alignement des autres zones (4a, 5a, 6a, 7a) du côté d'utilisation.

4. Disposition d'assise selon l'une des revendications précédentes, **caractérisée en ce que** les moyens de réglage sont conçus pour réaliser le réglage de la disposition d'assise (1) dans la disposition de couchage (14) au cours d'une procédure de transformation continue.

5. Disposition d'assise selon la revendication 2, **caractérisée en ce que** les moyens de réglage sont conçus pour réaliser le réglage de l'élément de surface de dossier (4, 6) et de l'élément de surface d'assise (5, 7) l'un par rapport à l'autre et le déplacement des zones latérales (4b, 4c, 5b, 5c, 6b, 6c, 7b, 7c) exclusivement de façon motorisée.

6. Disposition d'assise selon la revendication 2, **caractérisée en ce qu'une** unique unité d'entraînement est prévue, avec laquelle peut être réalisé le réglage de l'élément de surface de dossier (4, 6) et de l'élément de surface d'assise (5, 7) l'un par rapport à l'autre et le réglage des zones latérales (4b, 4c, 5b, 5c, 6b, 6c, 7b, 7c).

7. Disposition d'assise selon la revendication 2, **caractérisée en ce que** la disposition comprend des sièges individuels (2, 3) et **en ce qu'**une unité d'entraînement est prévue pour chaque siège (2, 3) de la disposition d'assise (1), avec laquelle peut être réalisé le réglage de l'élément de surface de dossier (4, 6) et de l'élément de surface d'assise (5, 7) du siège (2, 3) l'un par rapport à l'autre et le réglage des zones latérales (4b, 4c, 5b, 5c, 6b, 6c, 7b, 7c) du siège (2, 3).

8. Disposition d'assise selon la revendication 2, **caractérisée en ce que** les moyens de réglage comportent un dispositif de levier pour coupler entre eux l'unité d'entraînement et une zone latérale (4b, 4c, 5b, 5c, 6b, 6c, 7b, 7c) aux fins du réglage de la disposition d'assise (1) dans la disposition de couchage (14).

9. Disposition d'assise selon l'une des revendications précédentes, **caractérisée en ce que** les moyens de déplacement comportent un dispositif à ressort, au moyen duquel une force de traction peut être appliquée sur les éléments mobiles lors du réglage de la disposition d'assise.

10. Disposition d'assise selon la revendication 2, **caractérisée en ce qu'un** dispositif d'articulation est présent entre les éléments mobiles les uns par rapport aux autres de la disposition d'assise (1), dispositif d'articulation par l'intermédiaire duquel, lors du réglage de la disposition d'assise (1), les éléments mobiles de la disposition d'assise (1) peuvent être amenés dans différentes positions relatives au moyen de l'unité d'entraînement.
